# EUROPÄISCHE PATENTSCHRIFT

(11) **EP 2 842 138 B1**
(45) Veröffentlichungstag und Bekanntmachung des Hinweises auf die Patenterteilung: **28.11.2018**
(21) Anmeldenummer: 13715899.4
(22) Anmeldetag: 12.04.2013
(51) Int. Cl.: H01C 7/12, H01T 1/15

(54) **VORRICHTUNG ZUM ABLEITEN EINER ELEKTRISCHEN ÜBERSPANNUNG**
OVERVOLTAGE ARRESTER
DISPOSITIF DE PROTECTION CONTRE LES SURTENSIONS

(30) Priorität: 24.04.2012 DE 102012008484
(43) Veröffentlichungstag der Anmeldung: 04.03.2015
(73) Patentinhaber: Pfisterer Kontaktsysteme GmbH, 73650 Winterbach (DE)
(72) Erfinder: KLEIN, Thomas, 73265 Dettingen-Teck (DE); ZERRER, Michael, 73119 Zell u. A. (DE); LEONHARDT, Gottfried, 68723 Oftersheim (DE)
(74) Vertreter: Bartels und Partner, Patentanwälte
(86) Internationale Anmeldenummer: PCT/EP2013/001079
(87) Internationale Veröffentlichungsnummer: WO 2013/159871

(56) Entgegenhaltungen:
- EP-A1- 1 821 320
- US-A- 2 928 016
- US-A- 3 588 578
- US-A- 5 191 503

## Beschreibung

Die Erfindung betrifft eine Vorrichtung zum Ableiten einer elektrischen Überspannung, insbesondere einen steckbaren Überspannungsableiter mit einer Feststoffisolierung.

Elektrische Hochspannungs-Energieversorgungsnetze sind neben der ständig anstehenden Betriebsspannung auch Überspannungen ausgesetzt, gegen welche sie nur bedingt isoliert sind. Üblicherweise werden daher Überspannungsableiter eingesetzt, welche insbesondere transiente Überspannungen auf für die Isolierung der Betriebsmittel ungefährliche Werte begrenzen. Der Einsatz solcher Überspannungsableiter ist beispielsweise für den Schutz von Transformatoren oder Sammelschienen von gasisolierten Schalteinrichtungen (GIS) besonders wichtig, einerseits weil diese Betriebsmittel kostenintensiv sind und daher eine Beschädigung nach Möglichkeit zu vermeiden ist und andererseits weil ein Überspannungsschaden einen Netzausfall zur Folge haben kann.

Bei Mittelspannungsanlagen wurden bisher schon steckbare Überspannungsableiter eingesetzt, wie sie beispielsweise aus der DE 38 15 666 C2 bekannt sind. Für Hochspannungsanwendungen mit Betriebsspannungen von mehr als 50 kV werden bisher gekapselte und mit einem unter Hochdruck stehenden Isoliergas, beispielsweise Schwefelhexafluorid (SF6), gefüllte Ableiter eingesetzt.

Durch die US 5,191,503 A ist eine Vorrichtung zum Ableiten einer elektrischen Überspannung mit einer mindestens abschnittsweise eine nichtlineare Strom/Spannungs-Kennlinie aufweisenden Überspannungs-Ableitungseinheit bekannt, wobei eine erste Anschlusselektrode der Überspannungs-Ableitungseinheit mit einem ersten Anschluss der Vorrichtung verbunden ist, und eine zweite Anschlusselektrode der Überspannungs-Ableitungseinheit mit einem Niederspannungs- oder Erdungsanschluss der Vorrichtung verbunden ist, und wobei die Überspannungs-Ableitungseinheit mindestens abschnittsweise von einem Isolierkörper umgeben ist, wobei die Vorrichtung ein Schneidelement aufweist, das im Fall eines in Folge einer elektrischen Überlastung der Vorrichtung auftretenden Druckanstieges in den Isolierkörper einschneidet. Dabei ist die dem Erdungsanschluss zugeordnete zweite Anschlusselektrode oben angeordnet, und führt über ein rohrförmiges, druckdichtes, und leitendes Gehäuse der Vorrichtung zu einem Anlagebereich für das Schneidelement. Das Schneidelement ist mit der ersten, und unten angeordneten, Anschlusselektrode verbunden, auf die über eine außerhalb der Vorrichtung liegende Lichtbogenstrecke ein Blitzschlag einwirken kann. Wenn infolge eines äußerst starken Blitzschlages ein Störlichtbogen innerhalb der Vorrichtung auftritt, dehnt sich an der oberen Anschlusselektrode in einem Raum innerhalb des Gehäuses thermisch bedingt ein Gas aus, infolgedessen auf die Überspannungs-Ableitungseinheit ein Druck ausgeübt wird. Der Druck bewirkt, dass das an der Überspannungs-Ableitungseinheit anliegende Schneidelement bis zum Anlagebereich heruntergedrückt wird, so dass der zwischen dem Anlagebereich des Gehäuses und dem Schneidelement liegende Isolierkörper durchschnitten wird, und das Schneidelement eine elektrisch leitende Verbindung zwischen den beiden Anschlusselektroden herstellt. Infolge dieser leitenden Verbindung wird der Störlichtbogen unterbunden.

Der Erfindung liegt die Aufgabe zugrunde, eine gattungsgemäße Vorrichtung bereitzustellen, die auch beim Einsatz in Hochspannungs-Energieversorgungsanlagen eine hohe Betriebssicherheit aufweist, insbesondere soll auch im Fall einer elektrischen Überlastung der Vorrichtung die Gefahr von Gefährdungen und Beschädigungen gering sein.

Diese Aufgabe ist durch die im Anspruch 1 bestimmte Vorrichtung gelöst. Besondere Ausführungsarten der Erfindung sind in den Unteransprüchen bestimmt.

In einer Ausführungsart ist die Aufgabe gelöst durch eine Vorrichtung zum Ableiten einer elektrischen Überspannung mit einer mindestens abschnittsweise eine nichtlineare Strom/Spannungs-Kennlinie aufweisenden Überspannungs-Ableitungseinheit, wobei eine erste Anschlusselektrode der Überspannungs-Ableitungseinheit mit einem Hochspannungsanschluss der Vorrichtung verbunden ist und eine zweite Anschlusselektrode der Überspannungs-Ableitungseinheit mit einem Niederspannungs- oder Erdungsanschluss der Vorrichtung verbunden ist, und wobei die Überspannungs-Ableitungseinheit mindestens abschnittsweise von einem Isolierkörper umgeben ist, und die Vorrichtung ein mit dem Niederspannungs- oder Erdungsanschluss der Vorrichtung verbundenes Schneidelement aufweist, das nahe einem hochspannungsführenden Abschnitt der Vorrichtung, insbesondere nahe einem hochspannungsführenden Abschnitt der Überspannungs-Ableitungseinheit, angeordnet ist, und das im Fall einer in Folge einer elektrischen Überlastung der Vorrichtung auftretenden Aufblähung des Isolierkörpers in den Isolierkörper einschneidet und dadurch ein Lichtbogen zwischen dem hochspannungsführenden Abschnitt und dem Schneidelement zündbar und stabilisierbar ist, insbesondere in dem Bereich zwischen dem hochspannungsführenden Abschnitt und dem Schneidelement bis zu einer Abschaltung der elektrischen Überlastung durch eine separat von der Vorrichtung vorgesehene elektrische Trenneinrichtung stabilisierbar ist. Die Länge des derart stabilisierten Lichtbogens kann geringer sein als der Durchmesser des Schneidelements, insbesondere geringer als der Durchmesser einer vorzugsweise kreisförmig umlaufenden Schneidkante des Schneidelements, und vorzugsweise weniger als 80 % oder sogar weniger als 70 % dieses Durchmessers betragen.

In einer Ausführungsart handelt es sich bei dem Isolierkörper um einen elastisch verformbaren und insbesondere aus einem Silikonkautschuk hergestellten Feststoffisolierkörper, der eine vorzugsweise zentrische durchgehende Öffnung in Längsrichtung zur Aufnahme der Überspannungs-Ableitungseinheit aufweist und auf seiner Außenoberfläche eine zylindrische oder insbesondere sich zum niederspannungsseitigen Ende hin verjüngende Außenform aufweisen kann. Der Isolierkörper kann auf seiner Innenseite, insbesondere in dem der Hochspannungsseite der Überspannungs-Ableitungseinheit zugeordneten Abschnitt bereichsweise eine elektrische Leitfähigkeit aufweisen, etwa um ein Feldsteuerelement zu bilden. Der Isolierkörper kann im Bereich zur Aufnahme der Überspannungs-Ableitungseinheit eine lichte Weite aufweisen, die geringer ist als der Außendurchmesser der Überspannungs-Ableitungseinheit, so dass der Isolierkörper infolge seiner elastischen Verformung dicht an der Überspannungs-Ableitungseinheit anliegt.

Die Vorrichtung kann steckbar sein, wobei der Isolierkörper einstückig auch einen Abschnitt aufweisen kann, der beim Stecken der Vorrichtung in dichte Anlage an den zugehörigen Buchsenkörper kommt und eine elektrische Edelfuge mit dem Buchsenkörper bildet. Die Vorrichtung kann für Betriebsspannungen von mehr als 50 kV, insbesondere mehr als 70 kV und vorzugsweise mehr als 120 kV einsetzbar sein.

Die Überspannungs-Ableitungseinheit kann durch einen spannungsabhängigen Widerstand, einen sogenannten Varistor, gebildet sein, dessen elektrischer Widerstand spannungsabhängig ist und insbesondere ab einer Schwellenspannung sich so weit verringert, dass durch den sich dadurch einstellenden Stromfluss Überspannungen abgebaut werden können. In einer Ausführungsart weist die Überspannungs-Ableitungseinheit mehrere in Reihe geschaltete Varistoren auf, beispielsweise scheibenförmige Metalloxydvaristoren, die vorzugsweise mittels faserverstärkten, insbesondere glasfaserverstärkten, Kunststoffstäben zu einem Stapel verspannt, vorzugsweise in einer Zylinderform angeordnet und insbesondere mit einem aushärtbarem flüssigen Silikonisoliermaterial gefüllt und ohne Lufteinschlüsse umgossen sind.

Wesentlich für den sicheren Betrieb der Ableitungsvorrichtung ist, dass diese der auftretenden Überspannung bis zum Eingreifen einer separaten elektrischen Trenneinrichtung Stand hält. Bei entsprechend energiereichen Überspannungen kann es infolge einer elektrischen Überlastung der Vorrichtung zu einem Aufblähen des Isolierkörpers kommen. Insbesondere kann es durch thermische Überbelastungen infolge energiereicher Überspannungen zu Veränderungen der Spannungscharakteristik einzelner Varistoren kommen, die dann dauerhaft leitend oder kurzgeschlossen werden. In den sich einprägenden Kurzschlussstrompfaden können Lichtbogen entstehen, die durch den entstehenden Gasdruck zu einem Aufblähen des Isolierkörpers führen. Bei bekannten Vorrichtungen kann dies zu einem Aufplatzen der gesamten Vorrichtung und zu einem unkontrollierten Ausbilden eines verhältnismäßig langen und dadurch energiereichen Lichtbogens kommen, durch den es zu einer Beschädigung der umgebenden Anlagenteile kommen kann. Bei der erfindungsgemäßen Lösung schneidet das Schneidelement in den Isolierkörper ein und trennt erforderlichenfalls den Isolierkörper auf. Dadurch, dass das Schneidelement nahe einem hochspannungsführenden Abschnitt der Vorrichtung angeordnet ist, kommt es zur Ausbildung nur eines vergleichsweise kurzen Lichtbogens mit entsprechend geringer Energie, der darüber hinaus noch an einer durch die Geometrie der Vorrichtung vorgegebenen Stelle auftritt. Die vorzugsweise ringförmig angeordnete Schneidkante bildet eine Spitze aus, mit der einerseits der sich aufblähende Isolierkörper auftrennbar ist und andererseits eine metallische Abbrandelektrode bereitstellbar ist, auf welcher der erdseitige Lichtbogenfußpunkt stabilisierbar ist. Dadurch kann ein Aufplatzen der gesamten Vorrichtung und eine damit einhergehende Gefährdung von Personen oder Beschädigung umgebender Anlagenteile sicher vermieden werden.

In einer Ausführungsart weist das Schneidelement eine Schneidkante auf mit einem Schneidwinkel von weniger als 60°, insbesondere weniger als 45° und vorzugsweise weniger als 30°. Die Schneidkante kann dabei im Wesentlichen kreisförmig sein und den gesamten Isolierkörper umfassen. Die Schneidkante kann von zwei Schneidflanken gebildet sein, die in Richtung des Isolierkörpers spitz zueinander zulaufen. Eine der beiden Schneidflanken kann dabei rechtwinklig zur Längsachse des Schneidelements ausgerichtet sein, wobei die Längsachse des Schneidelements mit der Längsachse der Überspannungs-Ableitungseinheit und/oder der Längsachse der Vorrichtung zusammenfallen kann. Die zweite Schneidflanke kann gekrümmt verlaufen, beispielsweise in Form einer Kugelfläche.

In einer Ausführungsart ist das Schneidelement, insbesondere eine Schneidkante des Schneidelements, im regulären Betriebszustand der Vorrichtung von dem Isolierkörper beabstandet. Dadurch wird bei der Montage eine Beschädigung des Isolierkörpers durch die Schneidkante zuverlässig verhindert. Außerdem wird dadurch auch das Einschneiden oder Trennen des Isolierkörpers im Störfall vereinfacht, da die Schneidkante mit höherer Geschwindigkeit in die Außenoberfläche des Isolierkörpers einschneidet.

In einer Ausführungsart ist eine Schneidkante des Schneidelements in Bezug auf eine Längsachse der Vorrichtung im Bereich der Überspannungs-Ableitungseinheit angeordnet, insbesondere im Bereich des hochspannungsseitigen Endes der Überspannungs-Ableitungseinheit. Als besonders vorteilhaft hat es sich erwiesen, wenn die Schneidkante nicht unmittelbar an dem hochspannungsseitigen Anschluss der Überspannungs-Ableitungseinheit angeordnet ist, sondern mit einem axialen Abstand, der zwischen 20 und 500 % des Durchmessers der Ableitungseinheit entspricht, insbesondere zwischen 40 und 300 % und vorzugsweise zwischen 50 und 200 %, oder mit einem Abstand, der in etwa der axialen Länge eines der mehreren Varistorelemente entspricht. Dadurch bildet sich im Störfall ein Lichtbogen definierter Lage und Länge aus.

In einer Ausführungsart weist das Schneidelement vorzugsweise einstückig auch einen Rohrstutzen zur Aufnahme eines den Isolierkörper umhüllenden Isolierrohres auf. Der Rohrstutzen kann dabei eine Riffelung aufweisen, mittels dem das Isolierrohr mit dem Schneidelement verklebbar ist.

Die lichte Weite im Bereich des Rohrstutzens ist dabei größer als die lichte Weite des Schneidelements, beispielsweise kann die lichte Weite zwischen 120 und 250 % der lichten Weite des Schneidelements im Bereich der Schneidkante betragen.

Das Isolierrohr bildet einen Teil des Gehäuses der Vorrichtung.
Das Isolierrohr kann vom Isolierkörper radial beabstandet sein, so dass zwischen dem Isolierkörper und dem Isolierrohr im Innern der Vorrichtung ein Leervolumen vorgehalten wird, in welches hinein sich der Isolierkörper im Falle einer elektrischen Überlastung aufweiten kann, ohne dass das Gehäuse und insbesondere das Isolierrohr der Vorrichtung aufplatzt und eine Gefährdung von Personen oder umliegender Anlagenteile besteht. Das Isolierrohr ist aus einem elektrisch isolierenden Werkstoff, insbesondere aus einem Kunststoff, vorzugsweise aus einem faserverstärkten und insbesondere glasfaserverstärkten Kunststoff.

In einer Ausführungsart weist die Vorrichtung an ihrem dem Hochspannungsanschluss gegenüberliegenden Ende eine Druckentlastungseinrichtung auf. Über die Druckentlastungseinrichtung kann im Falle einer elektrischen Überlastung der innerhalb der Vorrichtung entstehende Gasdruck entweichen, wobei das Isolierrohr intakt bleiben kann. Die Druckentlastungseinrichtung sorgt für eine Druckentlastung durch einen sich zunächst in axialer Richtung entlang der Längsrichtung der Vorrichtung sich bewegenden Gasstrom, der vorzugsweise am niederspannungsseitigen Ende der Vorrichtung austritt. Auch dadurch wird eine Beschädigung insbesondere des Teils der Anlage, an dem die Vorrichtung festgelegt ist, zuverlässig verhindert.

In einer Ausführungsart weist die Druckentlastungseinrichtung ein Rückhalteelement zum Verhindern des Austritts von eine bestimmte Größe überschreitenden Partikeln aus der Vorrichtung auf. Das Rückhalteelement kann beispielsweise durch eine das Gehäuse der Vorrichtung in axialer Richtung abschließende Lochplatte gebildet sein. Die Lochplatte kann insbesondere das Isolierrohr in axialer Richtung abschließen. Vorzugsweise im Zentrum kann das Rückhalteelement eine Abstützung der Überspannungs-Ableitungseinheit aufweisen, beispielsweise einschließlich einer elektrischen Durchführung für den niederspannungsseitigen Anschluss der Ableitungseinheit. Die Druckentlastungseinrichtung kann ein im Fall der elektrischen Überlastung aufplatzbares Verschlusselement aufweisen, beispielsweise eine in Anlage an dem Rückhalteelement anliegende Membran, insbesondere eine Metallmembran, die im regulären Betriebsfall den Eintritt von Feuchtigkeit in die Vorrichtung zuverlässig verhindert.

In einer Ausführungsart weist die Vorrichtung eine Umlenkeinrichtung auf, mittels welcher ein im Fall einer elektrischen Überlastung der Vorrichtung aus dem Gehäuse austretender Gasstrom in eine vorgebbare Richtung umlenkbar ist. Die Umlenkeinrichtung kann beispielsweise axial endseitig an dem Gehäuse der Vorrichtung, insbesondere an der Druckentlastungseinrichtung, festlegbar sein und beispielsweise haubenförmig mit einer radialen Austrittsöffnung ausgebildet sein. Durch die gewählte Drehposition der Umlenkeinrichtung ist die Richtung des im Störfall aus der Vorrichtung austretenden Gasstroms festlegbar.

In einer Ausführungsart sind der Hochspannungsanschluss und der Niederspannungs- oder Erdungsanschluss der Vorrichtung an einer gemeinsamen axialen Seite angeordnet. Hierzu kann die zweite Anschlusselektrode der Überspannungs-Ableitungseinheit mittels einer in Längsrichtung der Vorrichtung verlaufenden Erdungsleitung mit dem Niederspannungs- oder Erdungsanschluss der Vorrichtung verbunden sein, der nahe oder an demselben axialen Ende der Vorrichtung angeordnet ist wie der Hochspannungsanschluss. Die Erdungsleitung kann in Form einer im Falle einer elektrischen Überlast auch aufschmelzbaren Erdungsschiene entlang des Gehäuses verlaufen und lösbar an der Vorrichtung festgelegt sein. Zwischen dem Niederspannungsanschluss der Überspannungs-Ableitungseinheit und der Erdungsleitung kann eine weitere elektrische Einheit anschließbar oder zwischenschaltbar sein, beispielsweise ein Impulszähler, welcher die Ereignisse auftretender Überspannungen zählt.

In einer Ausführungsart weist die Vorrichtung ein Befestigungsmittel, insbesondere einen Befestigungsflansch, auf, der lösbar an der Vorrichtung festgelegt ist, insbesondere unmittelbar oder mittelbar, beispielsweise unter Zwischenschaltung eines Verbindungselements, mit dem Schneidelement verbunden ist. Dadurch kann die Vorrichtung einfach und modular an die verschiedenen baulichen Gegebenheiten der elektrischen Anlage angepasst werden. Außerdem können im Falle einer durch eine elektrische Überlastung auftretenden Beschädigung der Vorrichtung im Bereich der Überspannungs-Ableitungseinheit nur die defekten Komponenten ausgetauscht werden und insbesondere können die gegebenenfalls noch intakten Komponenten weiterverwendet werden.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiel im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht eines ersten Ausführungsbeispiels einer erfindungsgemäßen Vorrichtung,
- Fig. 2: zeigt einen Längsschnitt durch die Vorrichtung der Fig. 1,
- Fig. 3: zeigt in vergrößerter Darstellung einen Ausschnitt der Fig. 2,
- Fig. 4: zeigt in vergrößerter Darstellung einen weiteren Ausschnitt der Fig. 2,
- Fig. 5: zeigt eine perspektivische Ansicht eines zweiten Ausführungsbeispiels einer erfindungsgemäßen Vorrichtung,
- Fig. 6: zeigt einen Längsschnitt durch die Vorrichtung der Fig. 5,
- Fig. 7: zeigt in vergrößerter Darstellung einen Ausschnitt der Fig. 6,
- Fig. 8: zeigt in vergrößerter Darstellung einen weiteren Ausschnitt der Fig. 6.

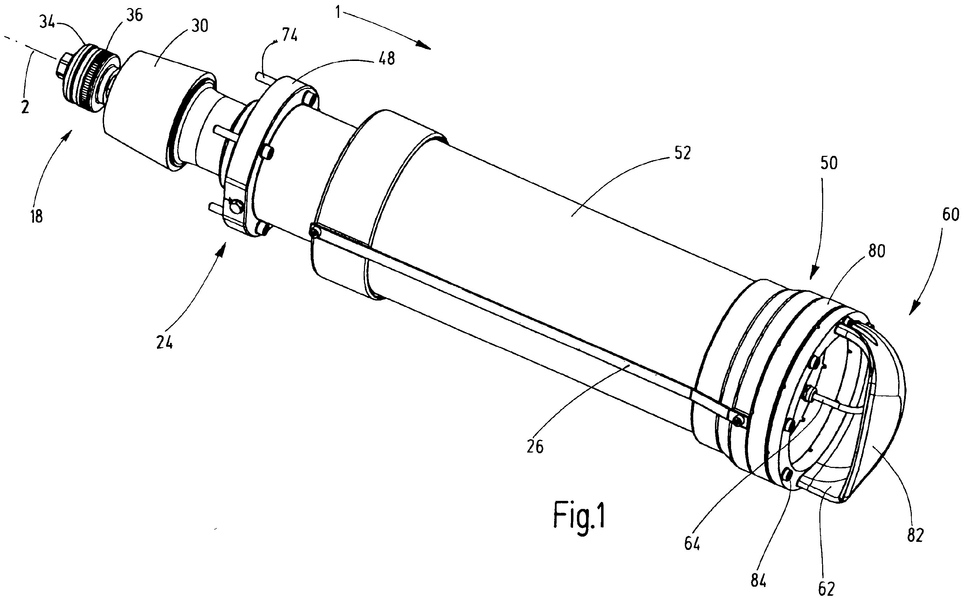

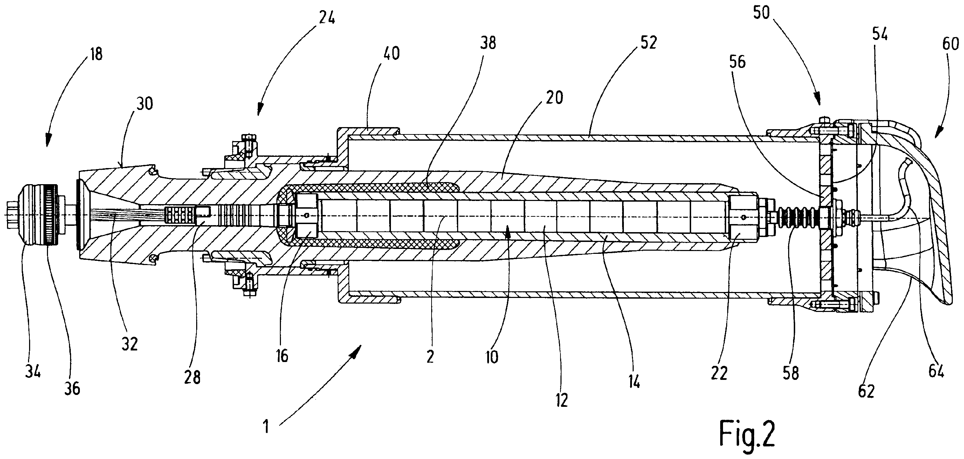

Die Fig. 1 zeigt eine perspektivische Ansicht eines ersten Ausführungsbeispiels einer erfindungsgemäßen Vorrichtung 1, und die Fig. 2 zeigt einen Längsschnitt durch die Vorrichtung 1 zum Ableiten einer elektrischen Überspannung mit einer mindestens abschnittsweise eine nicht lineare Strom/Spannungs-Kennlinie aufweisenden Überspannungs-Ableitungseinheit 10, die im Ausführungsbeispiel durch mehrere hintereinander angeordnete und elektrisch in Serie geschaltete, scheibenförmige oder kreiszylinderkörperförmige Varistoren 12 aus einem metalloxydischen Werkstoff gebildet ist. Die Varistoren sind in einem Isolierzylinder 14 mit vorzugsweiser glatter und runder Oberfläche zentrisch zwischen den Anschlusselektroden 16, 22 gestapelt, gegeneinander mechanisch verspannt und luftspaltfrei eingegossen. Eine erste Anschlusselektrode 16 der Überspannungs-Ableitungseinheit 10 ist mit einem Hochspannungsanschluss 18 der Vorrichtung 1 verbunden. Eine zweite Anschlusselektrode 22 der Überspannungs-Ableitungseinheit 10 ist mit einem Niederspannungs- oder Erdungsanschluss 24 der Vorrichtung 1 verbunden. Die elektrische Verbindung zwischen dem Niederspannungs- oder Erdungsanschluss 24 der Vorrichtung 1 und der zweiten Anschlusselektrode 22 der Überspannungs-Ableitungseinheit 10 erfolgt u.a. mittels einer entlang der Außenseite der Vorrichtung 1 und parallel zu deren Längsachse 2 verlaufenden Erdungsleitung 26. Dadurch sind der Hochspannungsanschluss 18 und der Niederspannungs- oder Erdungsanschluss 24 der Vorrichtung 1 an einer gemeinsamen axialen Seite der Vorrichtung 1 angeordnet, insbesondere kann der Erdungsanschluss 24 der Vorrichtung 1 durch die mechanische Fixierung der Vorrichtung 1 an dem anzuschließenden Anlagenteil erfolgen.

Die Überspannungs-Ableitungseinheit 10 ist mindestens abschnittsweise, im dargestellten Ausführungsbeispiel nahezu vollständig, von einem Isolierkörper 20 umgeben. Der Isolierkörper 20 ist aus einem elastisch verformbaren Silikonkautschuk hergestellt und weist eine Durchgangsöffnung auf, deren lichte Weite im Bereich der Überspannungs-Ableitungseinheit 10 etwas geringer ist als der Außendurchmesser der Überspannungs-Ableitungseinheit 10, insbesondere als der Außendurchmesser des Isolierzylinders14, so dass der Isolierkörper 20 dicht an der Überspannungs-Ableitungseinheit 10 anliegt.

Die elektrische Kontaktierung der ersten Anschlusselektrode 16 erfolgt mit einem Pressanschluss 28, in dessen Bereich die Durchgangsöffnung des Isolierkörpers 20 einen reduzierten Durchmesser aufweist und ebenfalls dicht an dem Pressanschluss 28 anliegt. Über eine vorzugsweise litzenförmige Leitung 32 wird der Anschluss nach außerhalb des Isolierkörpers 20 geführt und dort von einem Kontaktring 34 aufgenommen, der an seiner Außenumfangsfläche beispielsweise einen Viellinien-Kontakt 36 aufweist. Im Bereich der litzenförmigen Leitung 32 weist der Isolierkörper 20 einen Außenkonus 30 auf, der in dichte Anlage an einen nicht dargestellten, aber zu dem Steckkontakt zugehörigen Buchsenkörper bringbar ist und aufgrund der elastischen Verformung des Isolierkörpers 20 eine hochspannungsfeste elektrische Edelfuge bildet.

Im Bereich des hochspannungsseitigen Endes der Überspannungs-Ableitungseinheit 10 weist der Isolierkörpers 20 auf der Innenseite einen in elektrische Anlage an die Überspannungs- Ableitungseinheit 10 bringbaren elektrisch leitfähigen Abschnitt 38 auf, der beispielsweise durch eine entsprechende Anreicherung des Silikonkautschuks mit elektrisch leitfähigen Partikeln hergestellt ist und zur Vermeidung von Feldstärkespitzen in diesem Bereich dient.

Im Bereich des elektrisch leitfähigen Abschnitts 38 weist die Vorrichtung 1 ein mit dem Niederspannungs- oder Erdungsanschluss 24 verbundenes Schneidelement 40 auf, das nahe dem hochspannungsführenden Abschnitt der Vorrichtung 1, insbesondere nahe dem hochspannungsführenden Abschnitt der Überspannungs-Ableitungseinheit 10, angeordnet ist und im Fall einer infolge einer elektrischen Überlastung der Vorrichtung 1 auftretenden Aufblähung des Isolierkörpers 20 in den Isolierkörper 20 einschneidet und dadurch ein Lichtbogen zwischen dem hochspannungsführenden Abschnitt, beispielsweise der ersten Anschlusselektrode 16, und dem Schneidelement 40 zündbar ist.

An ihrem dem Hochspannungsanschluss gegenüberliegenden axialen Ende weist die Vorrichtung 1 eine Druckentlastungseinrichtung 50 auf. Sowohl das Schneidelement 40 als auch die Druckentlastungseinrichtung 50 umfassen jeweils einen rohrstutzenförmigen Abschnitt, wobei zwischen den beiden rohrstutzenförmigen Abschnitten ein aus einem glasfaserverstärktem Kunststoff hergestelltes hohlzylindrisches Isolierrohr 52 angeordnet ist, das den zylindrischen Mantel des Gehäuses der Vorrichtung 1 bildet und den Isolierkörper 20 nach außen abdeckt. Endseitig ist das Gehäuse durch eine Membran 54, insbesondere durch eine Metallmembran, abgedichtet, die zusammen mit einem Rückhalteelement 56, das im Ausführungsbeispiel die Form einer Lochplatte aufweist, Bestandteil der Druckentlastungseinrichtung 50 ist. Im Falle einer elektrischen Überlastung der Vorrichtung 1 und einem damit einhergehenden Aufblähen des Isolierkörpers 20, der im regulären Betriebszustand von dem Isolierrohr 52 beabstandet ist, kann der sich aufbauende Überdruck über ein Aufplatzen der Membran 54 axial entweichen, wobei durch das Rückhalteelement 56 Partikel, die ein vorgebbares Maß von beispielsweise 15 mm übersteigen, zurückgehalten werden.

Endseitig ist an der Vorrichtung 1 eine Umlenkeinrichtung 60 angeordnet, die eine Austrittsöffnung 62 aufweist, mittels welcher der aus der Vorrichtung 1 im Falle einer Überlastung austretende Gasstrom in radialer Richtung bezogen auf die Längsachse 2 der Vorrichtung 1 umlenkbar ist.

Die elektrische Kontaktierung der zweiten Anschlusselektrode 22 erfolgt über eine in einer zentrischen Isolierhülse 58 auch durch das Rückhalteelement 56 hindurchgeführte elektrische Leitung 64, die im Bereich der Umlenkeinrichtung 60 radial nach außen an die Mantelfläche der Vorrichtung 1 und von dort entlang des Isolierrohrs 52 an den niederspannungsseitigen Anschluss 24 geführt ist.
Der Querschnitt der Erdungsleitung 26 und/oder des Niederspannungs- oder Erdungsanschlusses 24 der Vorrichtung 1 ist so dimensioniert, dass sie unterbrochen wird, insbesondere aufschmilzt oder durchbrennt, und dadurch den Stromfluss unterbricht, wenn insbesondere infolge einer thermischen Überlastung der Varistoren 12 ein Kurzschlussstrom auftritt. Der Wert des die Unterbrechung hervorrufenden Kurzschlusstromes kann beispielsweise durch den Werkstoff und/oder die geometrischen Abmessungen der Erdungsleitung 26 und/oder des Niederspannungs- oder Erdanschlusses 24 vorbestimmt sein. Insbesondere im Zusammenwirken mit dem Isoliergehäuse 52 wird durch die Unterbrechung der Erdverbindung der zweiten Anschlusselektrode 22, insbesondere durch eine Auftrennung der Erdungsleitung 26, bewirkt, dass der auf dem Schneidelement 40 gezündete kurze Lichtbogen sich nur im Bereich des Schneidelements 40 stabilisieren kann und sich insbesondere nicht entlang des Stapels der Varistoren 12 ausbreitet.

Die Erdungsleitung 26 kann an dem Schneidelement 40 gegebenenfalls auch lösbar mechanisch und elektrisch verbunden sein. Die zugehörige elektrische Verbindungsstelle und/oder ein der Verbindungsstelle benachbarter oder an die Verbindungsstelle angrenzende Abschnitt der Erdungsleitung 26 kann so ausgestaltet sein, beispielsweise durch eine lokale Reduzierung des Querschnitts der Erdungsleitung 26, dass die Unterbrechung der Erdverbindung im Fall einer Überlast in diesem Bereich auftritt, so dass das Erdpotential im Wesentlichen nur bis zum axialen Ende des Schneidelements 40 anliegt und dadurch der Lichtbogen sich nur dort stabilisieren kann und insbesondere sich nicht entlang des Stapels der Varistoren 12 ausbreitet.

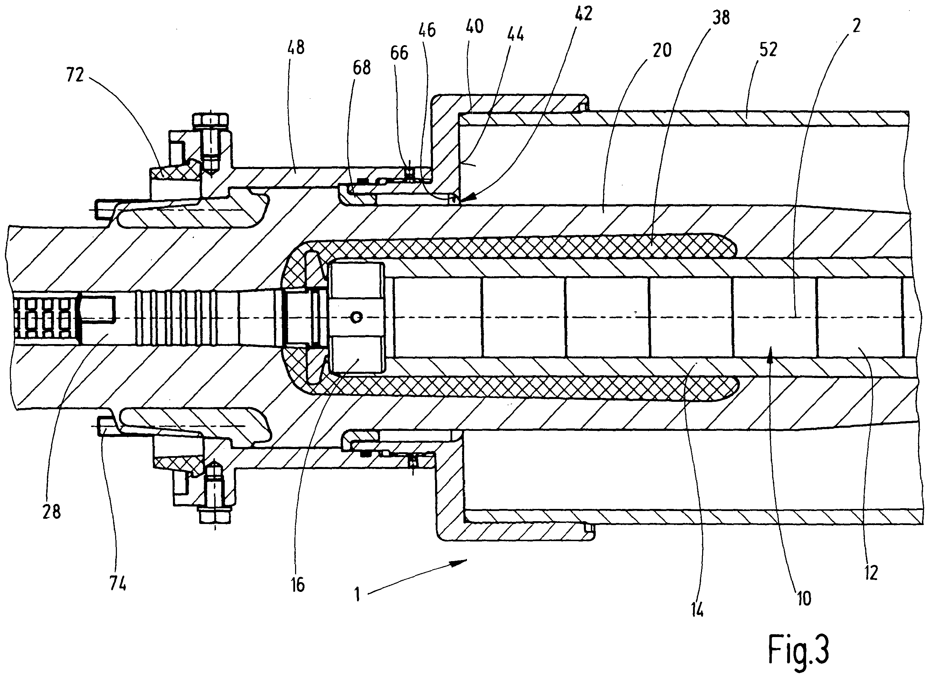

Die Fig. 3 zeigt in vergrößerter Darstellung den Längsschnitt durch die Vorrichtung 1 im Bereich der ersten Anschlusselektrode 16 der Überspannungs-Ableitungseinheit 10. Die Schneidkante 42 des Schneidelements 40 ist im dargestellten regulären Betriebszustand radial beabstandet von dem Isolierkörper 20. Die Schneidkante 42 ist kreisringförmig verlaufend. Die Schneidkante 42 ist durch das Zusammentreffen einer ersten Schneidflanke 44 und einer zweiten Schneidflanke 46 gebildet. Die erste Schneidflanke 44 verläuft rechtwinklig zur Längsachse 2 der Überspannungs-Ableitungseinheit 10, die auch die Längsachse der Vorrichtung 1 bildet. Die zweite Schneidflanke 46 ist zur ersten Anschlusselektrode 16 näherliegend und kugelförmig. Dadurch weist die Schneidkante 42 einen Schneidwinkel von im Ausführungsbeispiel weniger als 30° auf.

Das Schneidelement 40 weist auf seinem der zweiten Anschlusselektrode 22 zugewandten Seite, insbesondere seinem axialen Ende, einen rohrstutzenförmigen Abschnitt mit einer Riffelung quer zur Längsachse auf, in welchen ein erster Endabschnitt des Isolierrohrs 52 form- und kraftschlüssig eingeklebt ist. An seinem der ersten Anschlusselektrode 16 zugewandten axialen Ende weist das Schneidelement 40 ebenfalls einen rohrstutzenförmigen Abschnitt mit einem allerdings geringeren Durchmesser auf, der in einen Rohrflansch 48 einsteckbar oder auch einschraubbar und dort mittels Gewindestiften 66 mechanisch fixierbar sowie elektrisch mit dem Rohrflansch 48 verbindbar ist. Zur Fixierung des Isolierkörpers 20 und zur Sicherung eines radialen Abstandes des Isolierkörpers 20 von der Schneidkante 42 ist am axialen Ende des Schneidelements 40 ein rohrförmiges Element 68 eingelegt.

An seinem dem Schneidelement 40 gegenüberliegenden axialen Ende bildet der Rohrflansch 48 eine Aufnahmeöffnung für ein Dichtelement 72, mittels dem der Rohrflansch 48 und damit die Vorrichtung 1 dicht an einem elektrischen Anlageteil festlegbar ist. Zur Festlegung weist der Rohrflansch 48 Durchgangsöffnungen für Befestigungsschrauben 74 auf.

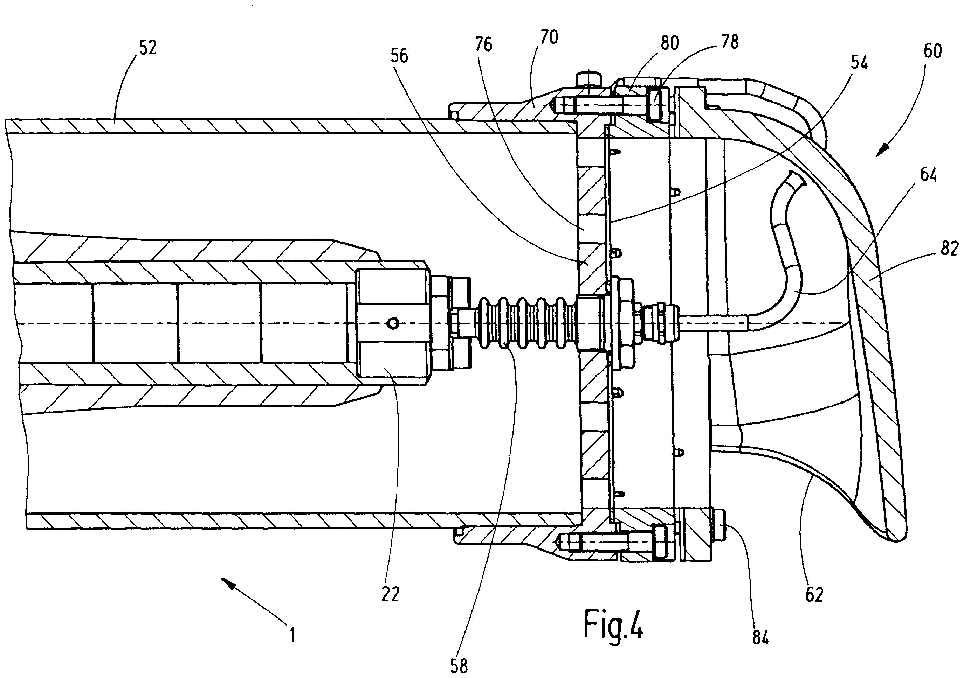

Die Fig. 4 zeigt eine vergrößerte Darstellung des Längsschnitts der Vorrichtung 1 im Bereich der zweiten Anschlusselektrode 22. An dem axialen Ende der Vorrichtung 1 ist auf das Isolierrohr 52 eine Endkappe 70 der Druckentlastungseinrichtung 50 aufgeschraubt, die einstückig auch das Rückhalteelement 56 mit seinen axialen Durchgangsöffnungen 76 ausbildet. Im dargestellten regulären Betriebszustand ist der durch das Isolierrohr 52 eingeschlossene Innenraum der Vorrichtung 1 axial endseitig durch eine an dem Rückhalteelement 56 aufgelegte und randseitig mit der Endkappe 70 dicht verbundene Membran 54 verschlossen. Im Falle einer elektrischen Überlast kann der in dem Isolierrohr 52 eingeschlossene Überdruck durch Aufplatzen der Membran 54 axial ausgeleitet werden, wobei durch die endseitige Umlenkeinrichtung 60 und deren einseitige Austrittsöffnung 62 der austretende Gasstrom radial ablenkbar ist.
Die Membran 54 ist mittels einem durch Schrauben 78 an der Endkappe 70 befestigten Ringelement 80 fixiert und im Bedarfsfall austauschbar.
Die Umlenkhaube 82 der Umlenkeinrichtung 60 ist ebenfalls mittels Schrauben 84 lösbar an der Vorrichtung 1 festlegbar, wobei die Umlenkhaube 82 in unterschiedlichen Ausrichtungen an dem Ringelement 80 festlegbar ist, so dass die Richtung des ausströmenden Gasstroms selbst im montierten Zustand der Vorrichtung 1 noch einstellbar ist.

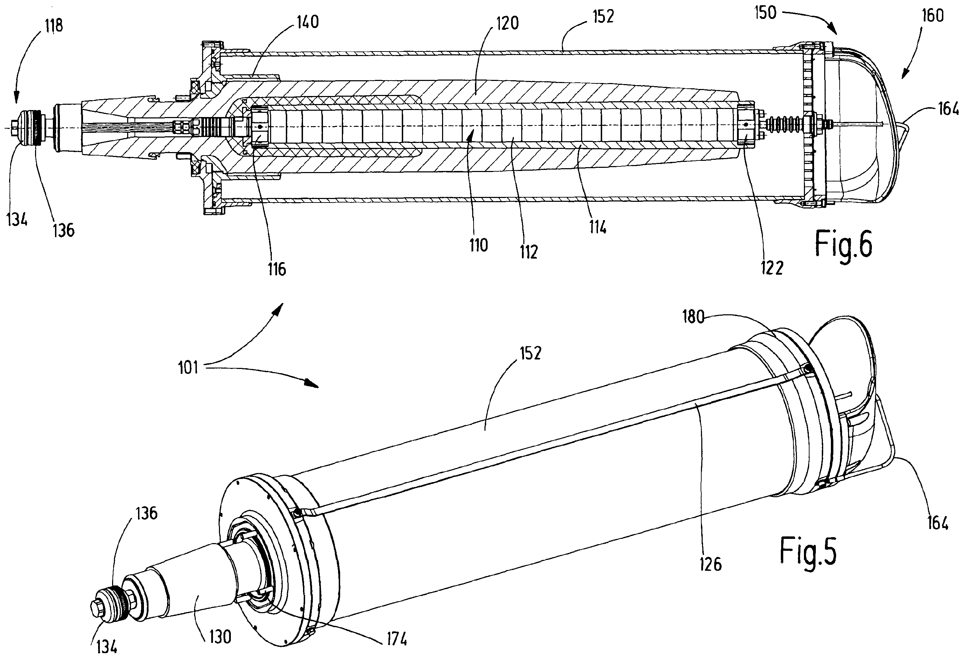

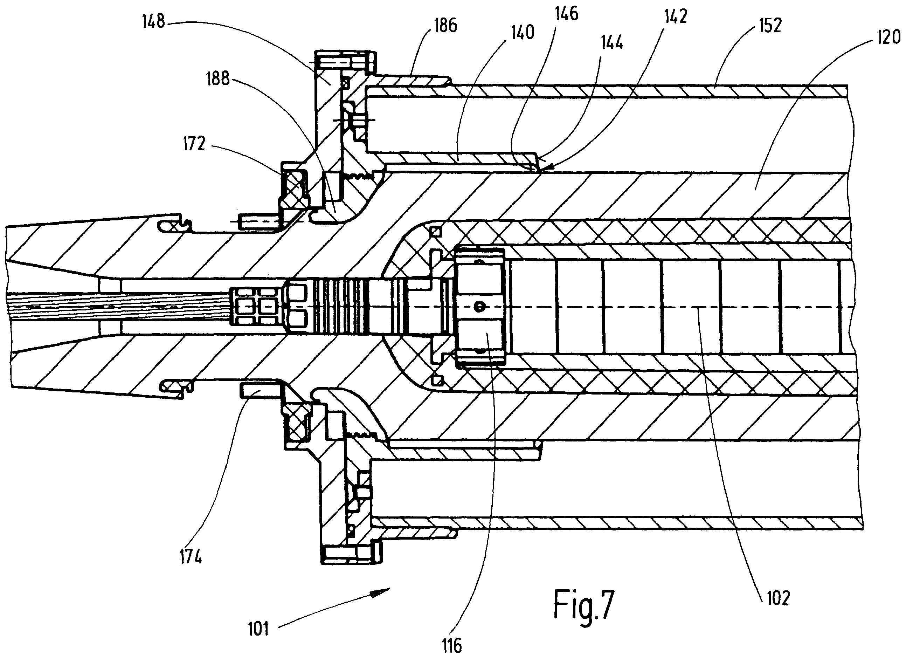

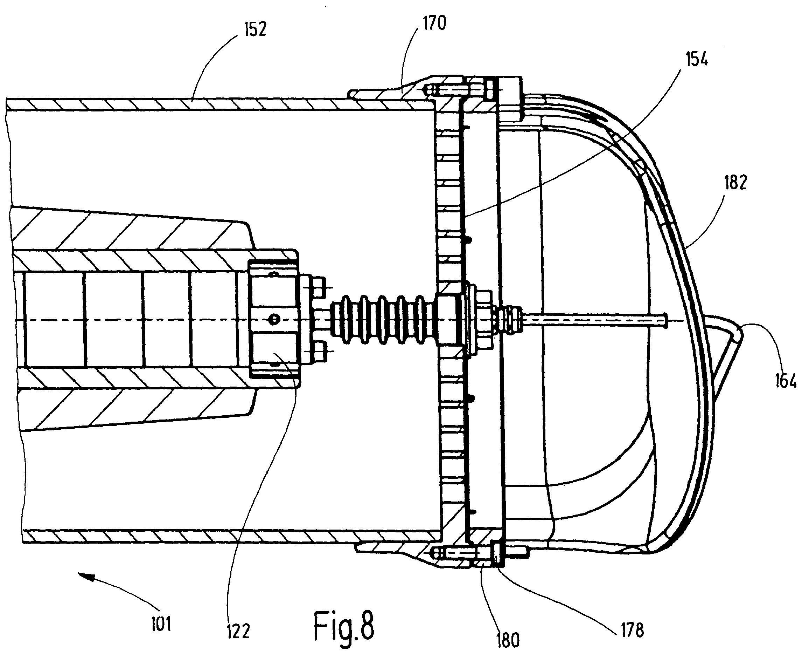

Die Fig. 5 zeigt eine perspektivische Ansicht eines zweiten Ausführungsbeispiels einer erfindungsgemäßen Vorrichtung 101, und die Fig. 6 zeigt einen Längsschnitt durch das zweite Ausführungsbeispiel. Die Fig. 7 zeigt in vergrößerter Darstellung einen Ausschnitt des Längsschnitts der Fig. 6 im Bereich der ersten Anschlusselektrode 116, und die Fig. 8 zeigt in vergrößerter Darstellung einen Ausschnitt des Längsschnitts der Fig. 6 im Bereich der zweiten Anschlusselektrode 122. Soweit das zweite Ausführungsbeispiel der Figuren 5 bis 8 mit dem ersten Ausführungsbeispiel der Figuren 1 bis 4 im Wesentlichen übereinstimmt, wird auf die diesbezügliche Beschreibung Bezug genommen, und es werden dementsprechend in den Figuren 5 bis 8 um den Betrag 100 erhöhte Bezugszeichen verwendet.

Ein Unterschied des zweiten Ausführungsbeispiels der Figuren 5 bis 8 gegenüber dem ersten Ausführungsbeispiel der Figuren 1 bis 4 besteht in der Form des Schneidelements 140. Während im ersten Ausführungsbeispiel das Schneidelement 40 einstückig einen Rohrflansch für das Isolierrohr 52 ausbildet und mit einem Rohrstutzenabschnitt in den Rohrflansch 48 eingreift, ist beim zweiten Ausführungsbeispiel das Schneidelement 140 in seinem die Schneidkante 142 bildenden Abschnitt im Wesentlichen hülsenförmig, wobei die erste Schneidflanke 144 mit der Längsachse 102 einen spitzen Winkel von vorzugsweise weniger als 90°, insbesondere zwischen 70 und 88°, einschließt. Die zweite Schneidflanke 146 ist durch eine Kugelfläche gebildet. An seinem der Schneidkante 142 gegenüberliegenden axialen Ende ist das Schneidelement 140 flanschartig verbreitert und im Flanschbereich mit einem Innenflansch eines Stutzenabschnitts 186 verbunden, insbesondere verschraubt.
Der Stutzenabschnitt 146 weist ein Innengewinde auf, das mit einem Außengewinde am axialen Ende des Isolierrohrs 152 verschraubbar ist. Radial innenseitig ist das Schneidelement 140 mit einem in Anlage an dem Isolierkörper 120 bringbaren Zentrierelement 188 verbunden.
Axial endseitig ist auf den Verbund von Schneidelement 140 und Stutzenabschnitt 186, insbesondere auf deren plane axiale Endfläche, der Rohrflansch 148 aufgeschraubt, der wiederum eine Aufnahmeöffnung für ein Dichtelement 172 aufweist und mittels dem die Vorrichtung 1 unter Verwendung der Befestigungsschrauben 174 an dem elektrischen Anlageteil festlegbar ist.

Ein weiterer Unterschied des zweiten Ausführungsbeispiels besteht darin, dass die elektrische Leitung 164 zur Verbindung der zweiten Anschlusselektrode 122 mit dem Niederspannungs- oder Erdungsanschluss der Vorrichtung 101 zentrisch und in axialer Richtung durch die Umlenkhaube 182 geführt ist und von dort zunächst in im Wesentlichen radialer Richtung nach außen bis auf die Höhe des Umfangs des Isolierrohrs 152 geführt ist und von dort in axialer Richtung an das Ringelement 180.

Die axiale Länge der Vorrichtung 101 des zweiten Ausführungsbeispiels vom Rohrflansch 148 bis zur Umlenkhaube 182 beträgt etwa 1,65 m, bei einem Durchmesser des Rohrflansches 148 von etwa 40 cm, wohingegen die entsprechende Länge beim ersten Ausführungsbeispiel etwa 1 m und der Durchmesser des Rohrflansches 48 etwas 20 cm beträgt. Das erste Ausführungsbeispiel ist für Bemessungsspannungen von bis zu 72,5 kV geeignet, demgegenüber beträgt die Bemessungsspannung des zweiten Ausführungsbeispiels maximal 145 kV.

## Patentansprüche

1. Vorrichtung (1) zum Ableiten einer elektrischen Überspannung mit einer mindestens abschnittsweise eine nichtlineare Strom/Spannungs-Kennlinie aufweisenden Überspannungs-Ableitungseinheit (10), wobei eine erste Anschlusselektrode (16) der Überspannungs-Ableitungseinheit (10) mit einem Hochspannungsanschluss (18) der Vorrichtung (1) verbunden ist und eine zweite Anschlusselektrode (22) der Überspannungs-Ableitungseinheit (10) mit einem Niederspannungs- oder Erdungsanschluss (24) der Vorrichtung (1) verbunden ist, und wobei die Überspannungs-Ableitungseinheit (10) mindestens abschnittsweise von einem Isolierkörper (20) umgeben ist, **dadurch gekennzeichnet, dass** die Vorrichtung (1) ein mit dem Niederspannungs- oder Erdungsanschluss (24) der Vorrichtung (1) verbundenes Schneidelement (40) aufweist, das nahe einem hochspannungsführenden Abschnitt der Vorrichtung (1), insbesondere nahe einem hochspannungsführenden Abschnitt der Überspannungs-Ableitungseinheit (10), angeordnet ist, und das im Fall einer in Folge einer elektrischen Überlastung der Vorrichtung (1) auftretenden Aufblähung des Isolierkörpers (20) in den Isolierkörper (20) einschneidet und dadurch ein Lichtbogen zwischen dem hochspannungsführenden Abschnitt und dem Schneidelement (40) zündbar und stabilisierbar ist.

2. Vorrichtung (1) nach Anspruch 1, **dadurch gekennzeichnet, dass** das Schneidelement (40) eine Schneidkante (42) aufweist mit einem Schneidwinkel von weniger als 60°, insbesondere weniger als 45° und vorzugsweise weniger als 30°.

3. Vorrichtung (1) nach Anspruch 1 oder einem der vorgenannten Ansprüche, **dadurch gekennzeichnet, dass** das Schneidelement (40), insbesondere eine Schneidkante (42) des Schneidelements (40), im regulären Betriebszustand der Vorrichtung (1) von dem Isolierkörper (20) beabstandet ist.

4. Vorrichtung (1) nach Anspruch 1 oder einem der vorgenannten Ansprüche, **dadurch gekennzeichnet, dass** eine Schneidkante (42) des Schneidelements (40) in Bezug auf eine Längsachse (2) der Vorrichtung (1) im Bereich der Überspannungs-Ableitungseinheit (10) angeordnet ist, insbesondere im Bereich des hochspannungsseitigen Endes der Überspannungs-Ableitungseinheit (10) angeordnet ist.

5. Vorrichtung (1) nach Anspruch 1 oder einem der vorgenannten Ansprüche, **dadurch gekennzeichnet, dass** das Schneidelement (40) einstückig auch einen Rohrstutzen zur Aufnahme eines den Isolierkörper (20) umhüllenden Isolierrohrs (52) aufweist.

6. Vorrichtung (1) nach Anspruch 1 oder einem der vorgenannten Ansprüche, **dadurch gekennzeichnet, dass** die Vorrichtung (1) an Ihrem dem Hochspannungsanschluss (18) gegenüberliegenden Ende eine Druckentlastungseinrichtung (50) aufweist.

7. Vorrichtung (1) nach Anspruch 6, **dadurch gekennzeichnet, dass** die Druckentlastungseinrichtung (50) ein Rückhalteelement (56) zum Verhindern des Austritts von eine vorbestimmte Größe überschreitenden Partikeln aufweist, insbesondere eine das Gehäuse der Vorrichtung (1) in axialer Richtung abschließende Lochplatte.

8. Vorrichtung (1) nach einem der Ansprüche 6 oder 7, **dadurch gekennzeichnet, dass** die Vorrichtung (1) eine Umlenkeinrichtung (60) aufweist, mittels welcher ein im Fall einer elektrischen Überlastung der Vorrichtung (1) aus dem Gehäuse der Vorrichtung (1) austretender Gasstrom in eine vorgebbare Richtung umlenkbar ist.

9. Vorrichtung (1) nach Anspruch 1 oder einem der vorgenannten Ansprüche, **dadurch gekennzeichnet, dass** der Hochspannungsanschluss (18) und der Niederspannungs- oder Erdungsanschluss (24) der Vorrichtung (1) an einer gemeinsamen axialen Seite der Vorrichtung (1) angeordnet sind, insbesondere dass die zweite Anschlusselektrode (22) der Überspannungs-Ableitungseinheit (10) mittels einem in Längsrichtung (2) der Vorrichtung (1) verlaufenden Erdungsleitung (26) mit dem Niederspannungs- oder Erdungsanschluss (24) der Vorrichtung (1) verbunden ist, der an oder nahe demselben axialen Ende der Vorrichtung (1) angeordnet ist wie der Hochspannungsanschluss (18).

10. Vorrichtung (1) nach Anspruch 1 oder einem der vorgenannten Ansprüche, **dadurch gekennzeichnet, dass** die Vorrichtung (1) ein Befestigungsmittel (48), insbesondere einen Befestigungsflansch, aufweist, der lösbar an der Vorrichtung (1) festgelegt ist, insbesondere unmittelbar oder mittelbar, beispielsweise unter Zwischenschaltung eines stutzenartigen Verbindungselements (186), mit dem Schneidelement (40) verbunden ist.

## Claims

1. A device (1) for discharging an electrical overvoltage, with an overvoltage discharge unit (10) having a non-linear current/voltage characteristic curve, at least in sections, wherein a first terminal electrode (16) of the overvoltage discharge unit (10) is connected to a high-voltage terminal (18) of the device (1) and a second terminal electrode (22) of the overvoltage discharge unit (10) is connected to a low-voltage or ground terminal (24) of the device (1), and wherein the overvoltage discharge unit (10) is surrounded, at least in sections, by an insulating body (20), **characterised in that** the device (1) has a cutting element (40) connected to the low-voltage or ground terminal (24) of the device (1), which cutting element is arranged near a high-voltage-conducting section of the device (1), in particular near a high-voltage-conducting section of the overvoltage discharge unit (10), and which cutting element cuts into the insulating body (20) in the event of the insulating body (20) distending as a result of an electrical overload of the device (1), and thereby an arc can be sparked and stabilised between the high-voltage-conducting section and the cutting element (40).

2. The device (1) according to claim 1, **characterised in that** the cutting element (40) has a cutting edge (42) with a cutting angle of less than 60°, in particular less than 45°, and preferably less than 30°.

3. The device (1) according to claim 1 or one of the preceding claims, **characterised in that** the cutting element (40), in particular a cutting edge (42) of the cutting element (40), is spaced apart from the insulating body (20) in the regular operating state of the device (1).

4. The device (1) according to claim 1 or one of the preceding claims, **characterised in that** a cutting edge (42) of the cutting element (40) is arranged, in respect of a longitudinal axis (2) of the device (1), in the region of the overvoltage discharge unit (10), in particular in the region of the end of the high-voltage side of the overvoltage discharge unit (10).

5. The device (1) according to claim 1 or one of the preceding claims, **characterised in that** the cutting element (40) also has a preferably integrally formed tube socket for receiving an insulating tube (52) enclosing the insulating body (20).

6. The device (1) according to claim 1 or one of the preceding claims, **characterised in that** the device (1) has a pressure relief device (50) on the end opposite the high-voltage terminal (18).

7. The device (1) according to claim 6, **characterised in that** the pressure relief device (50) has a retaining element (56) for preventing the exit of particles larger than a predetermined size, in particular a perforated plate closing the housing of the device (1) in axial direction.

8. The device (1) according to one of claims 6 or 7, **characterised in that** the device (1) has a deflecting device (60), by means of which a gas flow emerging from the housing of the device (1) in the event of an electrical overload of the device (1) can be deflected into a specifiable direction.

9. The device (1) according to claim 1 or one of the preceding claims, **characterised in that** the high-voltage terminal (18) and the low-voltage or ground terminal (24) of the device (1) are arranged on a common axial side of the device (1), in particular that the second terminal electrode (22) of the overvoltage discharge unit (10) is connected to the low-voltage or ground terminal (24) of the device (1) by means of a grounding cable (26) running in the longitudinal direction (2) of the device (1), which low-voltage or ground terminal is arranged on or near the same axial end of the device (1) as the high-voltage terminal (18).

10. The device (1) according to claim 1 or one of the preceding claims, **characterised in that** the device (1) has a fastening means (48), in particular a fastening flange, which is detachably mounted on the device (1), in particular is connected to the cutting element (40) directly or indirectly, for example having a neck-type connecting element (186) installed therebetween.

## Revendications

1. Dispositif (1) de limitation d'une surtension électrique, comprenant une unité (10) de limitation de la surtension, ayant, au moins par endroit, une courbe caractéristique courant/tension non linéaire, une première électrode (16) formant borne de l'unité (10) de limitation de la surtension étant reliée à une borne (18) de haute tension du dispositif (1), et une deuxième électrode (22) formant borne de l'unité (10) de limitation de la surtension étant reliée à une borne (24) de basse tension ou de terre du dispositif (1), l'unité (10) de limitation de la surtension étant entourée, au moins par endroit, d'un corps (20) isolant, **caractérisé en ce que** le dispositif (1) a, relié à la borne (24) de basse tension ou de terre du dispositif (1), un élément (40) de coupe, qui est disposé près d'une partie conduisant la haute tension du dispositif (1), notamment près d'une partie conduisant la haute tension de l'unité (10) de limitation de la surtension et qui, dans le cas d'un gonflement du corps (20) isolant se produisant à la suite d'une surcharge électrique du dispositif (1), pénètre dans le corps (20) isolant en le coupant et ainsi un arc électrique, entre la partie conduisant la haute tension et l'élément (40) de coupe, peut être amorcé et stabilisé.

2. Dispositif (1) suivant la revendication 1, **caractérisé en ce que** l'élément (40) de coupe a un bord (42) de coupe ayant un angle de coupe de moins de 60°, notamment de moins de 45° et de préférence de moins de 30°.

3. Dispositif (1) suivant la revendication 1 ou l'une des revendications précédentes, **caractérisé en ce que** l'élément (40) de coupe, notamment un bord (42) de coupe de l'élément (40) de coupe, est, dans l'état de fonctionnement régulier du dispositif (1), à distance du corps (20) isolant.

4. Dispositif (1) suivant la revendication 1 ou l'une des revendications précédentes, **caractérisé en ce qu'**un bord (42) de coupe de l'élément (40) de coupe est disposé, par rapport à un axe (2) longitudinal du dispositif (1), dans la partie de l'unité (10) de limitation de la surtension, en étant disposé notamment dans la partie de l'extrémité du côté de la haute tension de l'unité (10) de limitation de la surtension.

5. Dispositif (1) suivant la revendication 1 ou l'une des revendications précédentes, **caractérisé en ce que** l'élément (40) de coupe a, d'une seule pièce, également une tubulure de réception d'un tube (52) isolant entourant le corps (20) isolant.

6. Dispositif (1) suivant la revendication 1 ou l'une des revendications précédentes, **caractérisé en ce que** le dispositif (1) a un dispositif (50) de décompression à son extrémité opposée à la borne (18) de haute tension.

7. Dispositif (1) suivant la revendication 6, **caractérisé en ce que** le dispositif (50) de décompression a un élément (56) de retenue pour empêcher la sortie de particules dépassant une dimension définie à l'avance, notamment une plaque perforée fermant l'enveloppe du dispositif (1) dans la direction axiale.

8. Dispositif (1) suivant la revendication 6 ou 7, **caractérisé en ce que** le dispositif (1) a un dispositif (60) de déviation au moyen duquel un courant gazeux, sortant, dans le cas d'une surcharge électrique du dispositif (1), de l'enveloppe du dispositif (1) peut être dévié dans une direction pouvant être donnée à l'avance.

9. Dispositif (1) suivant la revendication 1 ou l'une des revendications précédentes, **caractérisé en ce que** la borne (18) de haute tension et la borne (24) de basse tension ou de terre du dispositif (1) sont disposées d'un même côté axial du dispositif (1), notamment **en ce que** la deuxième électrode (22) formant borne de l'unité (10) de limitation de la surtension est reliée, au moyen d'une ligne (26) de terre s'étendant dans la direction (2) longitudinale du dispositif (1), à la borne (24) de basse tension ou de terre du dispositif (1), qui est disposée à ou près de la même extrémité axiale du dispositif (1) que la borne (18) de haute tension.

10. Dispositif (1) suivant la revendication 1 ou l'une des revendications précédentes, **caractérisé en ce que** le dispositif (1) a un moyen (48) de fixation, notamment une bride de fixation, qui est fixée de manière amovible au dispositif (1), en étant notamment reliée directement ou indirectement, par exemple avec interposition d'un élément (186) de liaison de type tubulaire, à l'élément (40) de coupe.
